# EUROPÄISCHE PATENTSCHRIFT

(11) **EP 4 055 674 B1**
(45) Veröffentlichungstag und Bekanntmachung des Hinweises auf die Patenterteilung: **09.07.2025**
(21) Anmeldenummer: 20811555.0
(22) Anmeldetag: 19.11.2020
(51) Int. Cl.: H02G 1/12, H01R 43/28

(54) **VERFAHREN UND VORRICHTUNG ZUM BEARBEITEN EINES ELEKTRISCHEN KABELS**
METHOD AND DEVICE FOR PROCESSING AN ELECTRICAL CABLE
PROCÉDÉ ET DISPOSITIF DE TRAITEMENT D'UN CÂBLE ÉLECTRIQUE

(30) Priorität: 25.11.2019 DE 102019131759
(43) Veröffentlichungstag der Anmeldung: 14.09.2022
(73) Patentinhaber: Metzner Holding GmbH, 89079 Ulm (DE)
(72) Erfinder: SORG, Manfred, 89079 Ulm (DE)
(74) Vertreter: Lorenz, Matthias
(86) Internationale Anmeldenummer: PCT/EP2020/082657
(87) Internationale Veröffentlichungsnummer: WO 2021/104983

(56) Entgegenhaltungen:
- EP-A1- 2 117 089
- DE-A1- 102018 112 470
- JP-A- 2010 011 599

## Beschreibung

Die Erfindung betrifft ein Verfahren zum Bearbeiten eines elektrischen Kabels, wonach ein Kabelschirmgeflecht des Kabels, das entlang einer Längsachse des Kabels ausgehend von einem zu bearbeitenden Kabelende bis zu einer ersten Abisolierposition freigelegt ist, in Richtung auf ein dem zu bearbeitenden Kabelende abgewandtes Kabelende umgelegt wird, gemäß dem Oberbegriff des Anspruchs 1.

Die Erfindung betrifft ferner eine Vorrichtung zum Bearbeiten eines elektrischen Kabels, gemäß dem Oberbegriff des Anspruchs 15.

Die Bearbeitung eines elektrischen Kabels erfolgt in der Regel im Rahmen der Konfektionierung des elektrischen Kabels, um die elektrischen Leiter des Kabels mit einem elektrischen Steckverbinder zu verbinden. Im Rahmen der Kabelkonfektionierung wird somit zumindest ein Ende des elektrischen Kabels bearbeitet, um dieses für die Verbindung mit einem Steckverbinder vorzubereiten oder um einen Steckverbinder auf dem zu bearbeitenden Kabelende teilweise oder vollständig zu montieren.

Die Bearbeitung des Kabelendes oder der zu bearbeitenden Kabelenden des elektrischen Kabels kann dabei unter anderem das Abisolieren bzw. das Freilegen von Außenleitern und Innenleitern, das bereichsweise Ablängen des Kabels, das Aufbringen einer Stützhülse des späteren Steckverbinders auf den Kabelmantel des Kabels, das Umstülpen bzw. Umlegen eines Außenleiters bzw. eines Kabelschirmgeflechts des Kabels auf die Stützhülse, das Aufbringen einer Press- bzw. Crimphülse auf das über die Stützhülse umgelegte Kabelschirmgeflecht und/oder die Endmontage des Steckverbinders umfassen.

Besondere Schwierigkeiten bereitet hierbei in der Regel das Umlegen des Außenleiters, insbesondere wenn der Außenleiter als Kabelschirmgeflecht ausgebildet ist. Obwohl dieser Bearbeitungsschritt manuell vergleichsweise einfach durchgeführt werden kann, ist es zur Kostensenkung dennoch vorteilhaft, eine maschinelle bzw. eine möglichst vollautomatische Konfektionierung für eine Massenproduktion anzustreben.

Ein entsprechend maschinell automatisierbares Verfahren ist beispielsweise aus der EP 1 886 387 B1 bekannt. In der EP 1 886 387 B1 wird ein Verfahren beschrieben, bei dem ein Kabelschirmgeflecht über wenigstens einen Teil seines Umfangs mit einer radialen Kraft beaufschlagt wird, wofür ein zangenartiges Werkzeug verwendet wird. Hierdurch kann das Kabelschirmgeflecht radial aufgeweitet und schließlich umgebogen werden. Es hat sich allerdings gezeigt, dass sich das Verfahren nicht für alle Steckverbindertypen gleichermaßen eignet und insbesondere bei mehradrigen Kabeln mit unsymmetrischem Querschnitt des Kabelschirmgeflechts nicht immer zu zufriedenstellenden Ergebnissen führt.

Ein Verfahren zum manuellen Umlegen eines Kabelschirmgeflechts, das sich auch für unsymmetrische Kabelstrukturen eignen kann, wird beispielsweise in der JP 2010 11 599 A vorgeschlagen. Es wird vorgeschlagen, das Kabelschirmgeflecht mit zwei rotierenden Bürsten zunächst gerade auszubürsten und anschließend durch eine Änderung der Drehrichtung der Bürsten nach hinten über den Kabelmantel umzulegen.

Ein ähnliches Prinzip ist auch in der EP 2 117 089 A1 offenbart. In der EP 2 117 089 A1 wird vorgeschlagen, das Kabelschirmgeflecht im Rahmen einer maschinellen Bearbeitung mittels einer rotierenden Bürste auf den Kabelmantel umzulegen. Um nach dem Umlegen des Kabelschirmgeflechts noch eine Stützhülse oder eine sonstige Steckverbinderkomponente des späteren Steckverbinders zwischen den Kabelmantel und das Kabelschirmgeflecht einschieben zu können, wird das Kabelschirmgeflecht optional nicht unmittelbar auf den Kabelmantel, sondern auf eine konisch bzw. spitz zulaufende Distanzhülse umgelegt.

In der Praxis hat sich gezeigt, dass die bekannten Verfahren, insbesondere auch das Verfahren der EP 2 117 089 A1, keine ausreichende Flexibilität zur Bearbeitung von verschiedenen Kabeln und Steckverbinderarten bereitstellen.

In Anbetracht des bekannten Stands der Technik besteht die Aufgabe der vorliegenden Erfindung somit darin, ein Verfahren zum Bearbeiten eines elektrischen Kabels bereitzustellen, das insbesondere eine hohe Flexibilität beim Umlegen eines Kabelschirmgeflechts bietet.

Der vorliegenden Erfindung liegt auch die Aufgabe zugrunde, eine Vorrichtung zum Bearbeiten eines elektrischen Kabels bereitzustellen, die insbesondere eine hohe Flexibilität beim Umlegen eines Kabelschirmgeflechts bietet.

Schließlich ist es auch Aufgabe der Erfindung, ein vorteilhaftes Computerprogrammprodukt und eine Formhülse für eine Vorrichtung zum Bearbeiten eines elektrischen Kabels bereitzustellen.

Es ist außerdem eine Aufgabe der Erfindung, ein elektrisches Kabel bereitzustellen, das vorzugsweise für eine anschließende Konfektionierung besonders vorteilhaft vorbearbeitet ist.

Die Aufgabe wird für das Verfahren mit den in Anspruch 1 aufgeführten Merkmalen gelöst. Hinsichtlich der Vorrichtung wird die Aufgabe durch die Merkmale des Anspruchs 15 gelöst.

Die abhängigen Ansprüche und die nachfolgend beschriebenen Merkmale betreffen vorteilhafte Ausführungsformen und Varianten der Erfindung.

Es ist ein Verfahren zum Bearbeiten eines elektrischen Kabels vorgesehen, insbesondere für die Konfektionierung des elektrischen Kabels mit einem elektrischen Steckverbinder, wonach ein Kabelschirmgeflecht des Kabels, das entlang einer Längsachse des Kabels ausgehend von einem zu bearbeitenden Kabelende bis zu einer ersten Abisolierposition freigelegt ist, durch das Bürsten mittels wenigstens einer antreibbaren Bürste in Richtung auf ein dem zu bearbeitenden Kabelende abgewandtes Kabelende umgelegt wird.

Das zu bearbeitende Kabelende wird nachfolgend vereinfachend auch als "vorderes Kabelende" bezeichnet bzw. mit der relativen Richtungsangabe "vorne" in Beziehung gebracht, wohingegen das von dem zu bearbeitenden Kabelende abgewandte Kabelende nachfolgend mitunter auch als "hinteres Kabelende" bezeichnet bzw. mit der relativen Richtungsangabe "hinten" in Beziehung gebracht wird.

Vorzugsweise wird das Kabelschirmgeflecht im Rahmen der erfindungsgemäßen Bearbeitung tatsächlich nach hinten umgelegt und nicht nur aufgestellt. Besonders bevorzugt wird das Kabelschirmgeflecht vollständig umgelegt.

Grundsätzlich eignet sich die Erfindung zur Verwendung mit einem beliebigen elektrischen Kabel, das wenigstens einen elektrischen Leiter umfasst. Vorzugsweise umfasst das elektrische Kabel neben einem Außenleiter wenigstens einen Innenleiter, gegebenenfalls auch zwei, drei, vier, fünf, sechs oder noch mehr Innenleiter. Ganz besonders eignet sich die Erfindung zur Verwendung mit einem elektrischen Kabel, dessen Außenleiter als Kabelschirmgeflecht ausgebildet ist, d. h. als miteinander verflochtene Einzellitzen bzw. Einzeldrähte.

Die Erfindung kann sich beispielsweise gut für die Bearbeitung eines Kabelendes eines Koaxialkabels oder eines mehradrigen Datenkabels (ein Datenkabel mit mehreren Innenleitern), insbesondere für die Hochfrequenztechnik eignen.

Ein Bürsten des Kabelschirmgeflechts zum Umlegen des Kabelschirmgeflechts kann sich besonders vorteilhaft für verschiedene Kabelarten bzw. Kabelgeometrien eignen und damit auch unabhängig von der spezifischen Kabelart zu einem guten Ergebnis führen. Das "Umbürsten" des Kabels kann insbesondere selbst bei ovalen Kabelschirmgeflechten, beispielsweise für Datenleitungen mit einer Anzahl Innenleiter, bei der sich die Innenleiter nicht symmetrisch in dem Kabel verteilen lassen, gut eignen (z. B. bei einem Datenkabel mit genau zwei Innenleitern).

Die wenigstens eine Bürste kann zum Umlegen des Kabelschirmgeflechts in Richtung auf das von dem zu bearbeitenden Kabelende abgewandte Kabelende des Kabels (nach "hinten") angetrieben bzw. rotiert werden.

Erfindungsgemäß ist vorgesehen, dass entlang der Längsachse des Kabels eine definierte Umlegeposition für das Kabelschirmgeflecht bestimmt wird.

Bei der Umlegeposition handelt es sich um die Position entlang der Längsachse des Kabels, ausgehend von der das Kabelschirmgeflecht umgelegt bzw. zum Umlegen umgeknickt wird. Insbesondere kann es sich bei der Umlegeposition um den Wendepunkt des Verlaufs des umgelegten Kabelschirmgeflechts handeln, an dem das Kabelschirmgeflecht seinen Verlauf in Richtung auf das hintere Kabelende umkehrt.

Erfindungsgemäß ist außerdem vorgesehen, dass vor oder während des Bürstens eine Formhülse auf das Kabel aufgebracht und mit einem dem zu bearbeitenden Kabelende zugewandten, vorderen Ende an der Umlegeposition positioniert wird, um das Kabelschirmgeflecht ausgehend von der Umlegeposition auf die Formhülse umzulegen.

Durch die erfindungsgemäße Formhülse kann die Form des Umlegebereichs des Kabelschirmgeflechts vorteilhaft beeinflusst werden.

Durch die Verwendung der erfindungsgemäßen Formhülse ist die Flexibilität beim Umlegen des Kabelschirmgeflechts erhöht, da das Kabelschirmgeflecht nicht mehr zwingend unmittelbar auf das Kabel bzw. auf dessen Kabelmantel oder eine Steckverbinderkomponente des späteren Steckverbinders umgelegt werden muss. Der Verlauf des umgelegten Kabelschirmgeflechts hängt damit insbesondere nicht mehr zwingend unmittelbar von der Außengeometrie einer Steckverbinderkomponente des späteren Steckverbinders ab.

Wenn beispielsweise eine auf dem Kabelmantel vormontierte Stützhülse des späteren Steckverbinders einen axialen Längsschlitz aufweist, kann es in der Praxis vorkommen, dass Einzeldrähte des Kabelschirmgeflechts beim Umlegen in den Längsschlitz eindringen und durch den damit einhergehenden Längengewinn undefiniert über das hintere Ende der Stützhülse hinausragen. Dies gilt es zur Gewährleistung guter elektrischer Eigenschaften und zur Vermeidung von Kurzschlüssen im Rahmen der Montage des Steckverbinders zu vermeiden.

Durch die Formhülse kann die radiale Distanz bzw. der Abstand des umgelegten Kabelschirmgeflechts zu dem Kabelmantel des Kabels oder einer auf dem Kabelmantel vormontierten Steckverbinderkomponente des Steckverbinders vorgegeben bzw. beeinflusst werden.

Durch die Formhülse kann außerdem auch die axiale Umlegeposition entlang der Längsachse des Kabels durch Positionierung des vorderen Endes der Formhülse vorgegeben werden.

Erfindungsgemäß ist vorgesehen, dass die Umlegeposition derart bestimmt wird, dass die Umlegeposition von der ersten Abisolierposition abweicht und/oder dass die Formhülse eine stirnseitige Anschlagfläche für das Kabelschirmgeflecht aufweist.

Erfindungsgemäß kann es nunmehr vorgesehen sein, die Umlegeposition vorteilhaft unabhängig von der Abisolierposition zu variieren. Hierdurch können beispielsweise Toleranzen bei der ersten Abisolierposition oder bei einer oder mehreren weiteren Abisolierpositionen oder Montagepositionen von Steckverbinderkomponenten berücksichtigt und ausgeglichen werden.

Außerdem hat sich überraschend herausgestellt, dass auch die Kontaktierung des Kabelschirmgeflechts mit einer Steckverbinderkomponente, beispielsweise einer Press- oder Crimphülse, verbessert sein kann, wenn die Umlegeposition des Kabelschirmgeflechts nicht unmittelbar der ersten Abisolierposition entspricht.

Auch durch eine stirnseitige Anschlagfläche der Formhülse kann eine Kontaktierung des Kabelschirmgeflechts mit beispielsweise einer Press- oder Crimphülse oder einer sonstigen Steckverbinderkomponente verbessert sein, da das umgelegte Kabelschirmgeflecht dann dem Verlauf der Anschlagfläche folgt und eine "gefederte" bzw. elastische stirnseitige Kontaktierung mit der Steckverbinderkomponente ausbilden kann.

Die vorstehend genannten Varianten stehen somit insbesondere dahingehend miteinander in Beziehung, dass durch Formgebung und Positionierbarkeit des Umlegebereichs des Kabelschirmgeflechts jeweils für sich und insbesondere auch in synergetischer Kombination miteinander die Kontaktierbarkeit des Außenleiters mit einem Außenleiterkontakt des späteren Steckverbinders verbessert sein kann.

In einer vorteilhaften Weiterbildung der Erfindung kann vorgesehen sein, dass die Umlegeposition derart bestimmt wird, dass die Umlegeposition entlang der Längsachse des Kabels näher an dem zu bearbeitenden Kabelende abgeordnet ist als die erste Abisolierposition. Die Umlegeposition kann somit entlang der Längsachse des Kabels weiter "vorne" sein als die Abisolierposition.

Somit kann beim Umlegen des Kabelschirmgeflechts ein Abstand zu der ersten Abisolierposition eingehalten werden. Dies kann insbesondere für die Montage eines Steckverbinders für die Hochfrequenztechnik von Vorteil sein, da die Kontaktierung eines Außenleiterkontakts des Steckverbinders mit dem Kabelschirmgeflecht des Kabels dann weiter vorne an dem Kabel stattfinden kann.

Grundsätzlich kann allerdings auch vorgesehen sein, dass die Umlegeposition der ersten Abisolierposition entspricht. Auch eine zurückversetzte Umlegeposition hinter der ersten Abisolierposition kann in Sonderfällen vorgesehen sein, beispielsweise um das Kabelschirmgeflecht stufenförmig umzulegen.

Gemäß einer Weiterbildung der Erfindung kann vorgesehen sein, dass die Umlegeposition in Abhängigkeit von einer Montageposition einer auf dem Kabel vormontierten Steckverbinderkomponente eines elektrischen Steckverbinders bestimmt wird.

Hierdurch können Toleranzen bei der Montageposition der Steckverbinderkomponente ausgeglichen werden. Insbesondere kann dadurch vermieden werden, dass das umgelegte Kabelschirmgeflecht nach hinten über die Steckverbinderkomponente hinausragt - selbst wenn die Montageposition der Steckverbinderkomponente entlang der Längsachse des Kabels hohen Toleranzen unterliegt.

Bei einer Steckverbinderkomponente kann es sich insbesondere um eine Stützhülse, eine Presshülse bzw. Crimphülse oder um eine sonstige Außenleiterbaugruppe bzw. ein sonstiges Außenleiterbauelement des späteren Steckverbinders handeln.

Gemäß einer Weiterbildung der Erfindung kann vorgesehen sein, dass die Umlegeposition in Abhängigkeit von der ersten Abisolierposition bestimmt wird.

Es kann beispielsweise vorgesehen sein, die Umlegeposition in einem definierten Abstand zu der ersten Abisolierposition festzulegen, beispielsweise 0,1 mm bis 5,0 mm versetzt zu der ersten Abisolierposition festzulegen, vorzugsweise 0,1 mm bis 2,0 mm versetzt zu der ersten Abisolierposition festzulegen, ganz besonders bevorzugt 0,1 mm bis 1,0 mm versetzt zu der ersten Abisolierposition festzulegen.

Bei der ersten Abisolierposition kann es sich insbesondere um eine Position entlang der Längsachse des Kabels handeln, ab der der Kabelmantel des Kabels und optional auch eine Kabelfolie des Kabels abisoliert sind. Bei der Abisolierposition kann es sich somit insbesondere um die axiale Position entlang der Längsachse des Kabels handeln, ab der der Kabelmantel und/oder die Kabelfolie ausgehend von dem vorderen Ende des Kabels wieder vorhanden sind.

In einer Weiterbildung der Erfindung kann vorgesehen sein, dass die Umlegeposition in Abhängigkeit von einer weiteren Abisolierposition, ausgehend von der eine weitere Kabelkomponente des Kabels entlang der Längsachse des Kabels bis zu dem zu bearbeitenden Kabelende freigelegt ist, bestimmt wird.

Beispielsweise kann es sich bei der weiteren Abisolierposition um eine Abisolierposition handeln, ab der eine Kabelfolie in Richtung auf das zu bearbeitende Ende des Kabels abisoliert ist, ab der eine mehrere Innenleiter des Kabels gemeinsam einhüllende Füllschicht ("Filler") in Richtung auf das zu bearbeitende Kabelende des Kabels abisoliert ist und/oder ab der eine die Innenleiter des Kabels jeweils einhüllende Isolation in Richtung auf das zu bearbeitende Kabelende des Kabels abisoliert ist.

Insofern die weiteren Abisolierpositionen zur Bestimmung der Umlegeposition berücksichtigt werden, können entsprechende Toleranzen der weiteren Abisolierpositionen beim Umlegen des Kabelschirmgeflechts vorteilhaft berücksichtigt werden.

Zur Bestimmung der Abisolierposition kann eine Sensoreinrichtung verwendet werden, insbesondere um die erste Abisolierposition, die Montageposition(en) und/oder weitere Abisolierpositionen zu erfassen bzw. um das Kabel und etwaige vormontierte Steckverbinderkomponenten zur Bestimmung der Umlegeposition zu vermessen. Vorzugsweise kann die Sensoreinrichtung zumindest einen optischen Sensor aufweisen, beispielsweise eine Kamera, einen Lichtvorhang und/oder eine Lichtschranke.

In einer Weiterbildung der Erfindung kann vorgesehen sein, dass die Formhülse von einem auf dem zu bearbeitenden Kabelende zu montierenden elektrischen Steckverbinder unabhängig ist.

Bei der Formhülse handelt es sich somit vorzugsweise nicht um einen Bestandteil des späteren Steckverbinders. Die Formhülse ist vorzugsweise lediglich ein Bestandteil einer Vorrichtung zur Bearbeitung des elektrischen Kabels und kann damit vorteilhaft zum Umlegen des Kabels im Rahmen der Erfindung verwendet werden.

Erfindungsgemäß ist vorgesehen, dass die Formhülse wieder von dem Kabel entfernt wird, nachdem das Kabelschirmgeflecht auf die Formhülse umgelegt wurde.

Die Formhülse kann vorzugsweise zerstörungsfrei von dem Kabel entfernt werden.

Beispielsweise kann die Formhülse in Richtung auf das von dem zu bearbeitenden Kabelende abgewandte Kabelende (nach "hinten") von dem Kabel abgezogen werden. Die Formhülse kann allerdings auch seitlich von dem Kabel entfernt werden - durch eine lineare und/oder radiale/kurvige Bewegung. Auch eine Bewegungsabfolge der Formhülse kann zum Entfernen der Formhülse vorgesehen sein, beispielsweise eine Bewegung nach hinten, bis die Formhülse aus dem Kabelschirmgeflecht vollständig herausgezogen wurde, gefolgt von einem seitlichen Abziehen/Entfernen/Öffnen der Formhülse.

Für die Bewegung der Formhülse (für die Zustellung an das Kabel und/oder das Entfernen von dem Kabel) axial und/oder radial relativ zu dem Kabel kann eine Aktuatoreinrichtung vorgesehen sein.

Die stirnseitige Anschlagfläche der Formhülse bildet vorzugsweise eine definierte Kante zum Umlegen des Kabelschirmgeflechts aus.

In einer Weiterbildung der Erfindung kann vorgesehen sein, dass die stirnseitige Anschlagfläche der Formhülse zumindest abschnittsweise orthogonal zu der Längsachse des Kabels verläuft, wenn die Formhülse auf das Kabel aufgebracht ist.

Es kann allerdings auch eine nicht orthogonale Ausrichtung der stirnseitigen Anschlagfläche vorgesehen sein, beispielsweise eine beliebige winklige Ausrichtung der Anschlagfläche zu der Längsachse des Kabels.

In einer vorteilhaften Weiterbildung der Erfindung kann vorgesehen sein, dass die stirnseitige Anschlagfläche der Formhülse als Ring, insbesondere Kreisring, ausgebildet ist. Vorzugsweise kann die Ringbreite des Kreisrings zu dem Innenradius des Kreisrings ein Verhältnis von mindestens 1:20, vorzugsweise mindestens 1:10, besonders bevorzugt mindestens 1:5 aufweisen. Beispielsweise können aber auch kleinere Verhältnisse vorgesehen sein oder auch größere Verhältnisse, beispielsweise von mindestens 1:2 oder mindestens 1:1.

Vorzugsweise ist die Ringbreite derart gewählt, dass eine sichtbare Stufe in dem umgelegten Kabelschirmgeflecht entsteht (bestehend aus zwei Knickbereichen).

Insbesondere ein Kreisring zur Ausbildung der stirnseitigen Anschlagfläche hat sich als besonders geeignet herausgestellt.

In einer vorteilhaften Weiterbildung der Erfindung kann vorgesehen sein, dass die Formhülse an dem vorderen Ende eine Fase und/oder einen Übergangsradius aufweist, vorzugsweise zwischen der stirnseitigen Anschlagfläche und einer Seitenfläche der Formhülse.

Eine Fase und/oder ein Übergangsradius kann das Bürstergebnis beim Umlegen des Kabelschirmgeflechts noch verbessern und außerdem die Belastung des Kabelschirmgeflechts durch ein scharfes Abknicken verringern.

In einer vorteilhaften Weiterbildung der Erfindung kann vorgesehen sein, dass die Formhülse einen runden Querschnitt aufweist.

Grundsätzlich kann die Formhülse allerdings auch einen ovalen, einen rechteckigen oder einen sonstigen Querschnitt aufweisen. Die Geometrie kann dabei vorzugsweise der Geometrie des Kabelmantels oder einer auf und/oder unter dem umgelegten Kabelschirmgeflecht zu montierenden Steckverbinderkomponente entsprechen oder zumindest näherungsweise entsprechen.

Da die auf oder unter dem Kabelschirmgeflecht zu montierenden Steckverbinderkomponenten in der Regel eine runde Innen- oder Außengeometrie aufweisen, ist eine runde Formhülse in der Regel vorteilhaft.

In einer Weiterbildung der Erfindung kann vorgesehen sein, dass sich die Formhülse in Richtung auf das vordere Ende verjüngt. Die Formhülse kann sich auch nur abschnittsweise verjüngen.

Das Kabelschirmgeflecht kann somit bedarfsweise auch noch nicht vollständig auf den Kabelmantel oder die Steckverbinderkomponente umgelegt werden, wodurch beispielsweise weitere Steckverbinderkomponenten des späteren Steckverbinders, ausgehend von dem hinteren Kabelende unter das Kabelschirmgeflecht eingeschoben werden können.

Gemäß einer Weiterbildung der Erfindung kann vorgesehen sein, dass die Formhülse aus zwei Halbschalen oder mehr Halbschalen ausgebildet ist, die in Richtung auf die Längsachse des Kabels zugestellt werden, um die Formhülse auf das Kabel aufzubringen.

Die Formhülse kann aber auch einteilig ausgebildet sein, insbesondere in der Art eines Rohrs.

Vorzugsweise weist die Formhülse genau zwei Halbschalen auf. Die Formhülse kann allerdings auch drei, vier, fünf, sechs oder noch mehr Halbschalen aufweisen.

Die Verwendung einer mehrteiligen Formhülse, insbesondere mit zwei Halbschalen, hat sich als besonders geeignet herausgestellt, um die Formhülse auf das Kabel aufzubringen und nach dem Umlegen des Kabelschirmgeflechts auch wieder einfach von dem Kabel zu entfernen.

In einer vorteilhaften Weiterbildung der Erfindung kann vorgesehen sein, dass die Formhülse über einer auf dem Kabel vormontierten Steckverbinderkomponente eines elektrischen Steckverbinders auf das Kabel aufgebracht wird, vorzugsweise über einer axial geschlitzten Stützhülse des Steckverbinders.

Die Formhülse kann somit die Steckverbinderkomponente des späteren Steckverbinders, beispielsweise die axial geschlitzte Presshülse des Steckverbinders, während des Umbürstens des Kabelschirmgeflechts abdecken. Unvorteilhafte Konturen und Bereiche der Steckverbinderkomponente, beispielsweise ein axialer Längsschlitz, können somit das Umlegen des Kabelschirmgeflechts nicht mehr negativ beeinflussen. Außerdem können die Steckverbinderkomponenten durch die Formhülse vor den rotierenden Bürsten geschützt werden.

In einer vorteilhaften Weiterbildung der Erfindung kann vorgesehen sein, dass vor und/oder während des Umlegens des Kabelschirmgeflechts eine Schutzhülse entlang der Längsachse des Kabels in Richtung auf die erste Abisolierposition zwischen das Kabelschirmgeflecht und darunterliegende Kabelkomponenten des Kabels eingeschoben wird.

Die Schutzhülse ist vorzugsweise in der Arte eines einteiligen Rohres ausgebildet. Auch eine mehrteilige Schutzhülse kann allerdings grundsätzlich vorgesehen sein, beispielsweise eine Schutzhülse aus einer, zwei oder mehr Halbschalen.

Eine Schutzhülse mit nur geringer Wandstärke kann sich besonders gut eignen. Die Schutzhülse kann an ihrem vorderen Ende optional eine Fase aufweisen um das Einschieben noch zu erleichtern.

Vorzugsweise entspricht der Innenradius der Schutzhülse dem Außenradius der unter dem Kabelschirmgeflecht befindlichen Kabelkomponente möglichst exakt, damit keine Einzeldrähte des Kabelschirmgeflechts unbeabsichtigt unter die Schutzhülse geraten können.

Bei dem Einschieben der Schutzhülse kommt es grundsätzlich nur auf eine relative Bewegung zwischen dem Kabel und der Schutzhülse an. Somit kann die Schutzhülse auf das Kabel zubewegt werden und/oder das Kabel auf die Schutzhülse zubewegt werden.

Das Einschieben der Schutzhülse unter den zu bürstenden Abschnitt des Kabelschirmgeflechts kann von Vorteil sein, um unter dem Kabelschirmgeflecht befindliche Bereiche bzw. Kabelkomponenten des Kabels, insbesondere Kabelfolien, Schutzmäntel, Dielektrika und/oder Innenleiter vor mechanischer oder thermischer Belastung und/oder vor elektrostatischer Aufladung durch das Bürsten zu schützen. Insbesondere zum Schutz einer Kabelfolie, beispielsweise einer Aluminiumfolie oder einer Verbundfolie, kann die Schutzhülse von Vorteil sein.

Die Verwendung einer Schutzhülse zwischen dem Kabelschirmgeflecht und den darunter befindlichen Bereichen des Kabels kann gegebenenfalls entfallen, wenn der Bereich des Kabels unmittelbar unterhalb des Kabelschirmgeflechts ausreichend unempfindlich gegen mechanische und thermische Belastungen des Bürstens ist. Beispielsweise bei Verwendung eines Mantels aus Polytetrafluorethylen (z. B. Teflon) oder PVC unterhalb des Kabelschirmgeflechts kann die Verwendung einer Hülse vorzugsweise entfallen.

Die Schutzhülse kann in vorteilhafter Weise auch zur Zentrierung bzw. zum Abstützen des zu bearbeitenden Endes des elektrischen Kabels und zur verbesserten Führung des Kabels dienen.

Gemäß einer Weiterbildung der Erfindung kann vorgesehen sein, dass das Kabelschirmgeflecht vor dem Einschieben der Schutzhülse vorbearbeitet wird, um eine radiale Aufweitung zu bewirken.

Grundsätzlich ist es aber auch möglich, die Schutzhülse unter das Kabelschirmgeflecht zu schieben, ohne das Kabelschirmgeflecht zuvor aufzuweiten.

Das Kabelschirmgeflecht kann vor dem Einschieben der Schutzhülse somit zumindest teilweise radial aufgestellt sein, insbesondere im Bereich des vorderen, freien Endes des Kabelschirmgeflechts, so dass die Schutzhülse vorteilhaft unter das Kabelschirmgeflecht gelangen kann.

Unter einem radialen Aufweiten kann insbesondere ein elastisches oder plastisches Umbiegen des vorderen, freien Endes des Kabelschirmgeflechts verstanden werden derart, dass sich das freie Ende des Kabelschirmgeflechts zumindest teilweise in radialer Richtung, aber nicht zwingend senkrecht, zu der Längsachse des elektrischen Kabels erstreckt.

Dabei kann es besonders von Vorteil sein, das Kabelschirmgeflecht nur geringfügig radial aufzuweiten, um keine definierte Stoßkante für die Schutzhülse einzubringen, da die Schutzhülse das Kabelschirmgeflecht sonst gegebenenfalls noch weiter aufweitet, anstatt wie gewünscht unter das Kabelschirmgeflecht einzudringen.

Gemäß einer Variante zum Vorbearbeiten des Kabelschirmgeflechts kann ein radial an das freigelegte Kabelschirmgeflecht zustellbares zangenartiges Werkzeug vorgesehen sein, das ausgebildet und eingerichtet ist, radial umlaufende Eindrückungen in dem Kabelschirmgeflecht zu erzeugen (vorzugsweise an der Umlegeposition oder zumindest angrenzend an die Umlegeposition), so dass sich das freigelegte Ende des Kabelschirmgeflechts radial aufweitet. In vorteilhafter Weise ist die radiale Kraft zur Erzeugung der Eindrückungen kleiner als eine Kraft, die zum wenigstens teilweisen Durchtrennen des Kabelschirmgeflechts erforderlich wäre. Bei dem zangenartigen Werkzeug kann es sich vorzugsweise um ein Formmesser handeln, welches an den Außenumfang des elektrischen Kabels angepasst ist. Vorzugsweise wird ein stumpfes Formmesser verwendet.

Es sind auch andere Lösungen möglich um das Kabelschirmgeflecht aufzuweiten, es muss hierfür nicht unbedingt das zangenartige Werkzeug verwendet werden. Beispielsweise kann auch eine Vorbearbeitung mittels der wenigstens einen Bürste vorgesehen sein, wobei die Bürste das Kabelschirmgeflecht dann vorzugsweise nur im Bereich des vorderen, freien Endes durch einen kurzen und möglichst schonenden mechanischen Kontakt teilweise aufstellt.

In einer vorteilhaften Weiterbildung der Erfindung kann vorgesehen sein, dass das Kabelschirmgeflecht vor dem Umlegen mittels der wenigstens einen antreibbaren Bürste in Richtung auf das zu bearbeitende Kabelende gerade ausgebürstet wird.

Die Bürsten können hierzu zunächst in Richtung auf das vordere Kabelende gedreht bzw. angetrieben werden. Zum späteren Umlegen des Kabelschirmgeflechts kann die Bürstrichtung dann wieder umgedreht werden.

Die bürstende Bewegung der Bürsten kann ein verflochtenes Kabelschirmgeflecht verlässlich entflechten und die Einzellitzen bzw. die Einzeldrähte des Kabelschirmgeflechts linear in Bürstrichtung ausrichten. Grundsätzlich kann allerdings auch vorgesehen sein, dass das Kabelschirmgeflecht vor dem Umlegen des Kabelschirmgeflechts nicht gerade ausgebürstet wird. In Abhängigkeit von dem auf dem Kabelende zu montierenden Steckverbindertyp kann ein Ausbürsten vorgesehen sein oder nicht vorgesehen sein. In einer vorteilhaften Weiterbildung der Erfindung kann vorgesehen sein, dass wenigstens zwei antreibbare Bürsten, wenigstens drei antreibbare Bürsten oder wenigstens vier antreibbare Bürsten verwendet werden.

Durch die Verteilung der Bürsten entlang des Umfangs des Kabels kann eine vollumfassende Bearbeitung des Kabelschirmgeflechts erfolgen.

Die Verwendung von genau zwei Bürsten ist besonders bevorzugt, da sich anhand von Versuchsreihen gezeigt hat, dass bereits mit zwei Bürsten ein ausreichendes Bürstergebnis zum Umlegen des Kabelschirmgeflechts erreichbar sein kann. Grundsätzlich können allerdings auch noch mehr Bürsten vorgesehen sein. Auch die Verwendung von lediglich einer einzigen antreibbaren Bürste kann vorgesehen sein. In einer Weiterbildung der Erfindung kann vorgesehen sein, dass die wenigstens eine antreibbare Bürste vor oder während des Bürstens in Richtung auf die Längsachse des Kabels zugestellt wird.

Es kann außerdem vorgesehen sein, dass das Kabelschirmgeflecht während des Bürstens bzw. während des Umlegens des Kabelschirmgeflechts (oder gegebenenfalls auch während des optionalen Geradebürstens des Kabelschirmgeflechts) entlang der wenigstens einen Bürste (beispielsweise zwischen den Bürsten hindurch) bewegt wird und/oder dass die wenigstens eine Bürste entlang der Längsachse des Kabels über das Kabel bewegt wird.

Die Geschwindigkeit der angetriebenen Bürsten, der Bewegung der Bürsten entlang der Längsachse des Kabels relativ zu dem Kabel sowie der Zustellung des Kabelschirmgeflechts während des Bürstens kann anwendungsspezifisch bestimmt werden.

Für die Bewegung der Bürsten axial und/oder radial relativ zu dem Kabel kann eine Aktuatorbaugruppe vorgesehen sein.

In einer Ausgestaltung der Erfindung kann vorgesehen sein, dass die Bürsten als Rundbürsten ausgebildet sind. Unter einer Rundbürste können beliebige Bürsten verstanden werden, die sich um eine Mittelachse antreiben lassen, beispielsweise auch sogenannte Topfbürsten und Kegelbürsten. Die Rundbürsten müssen nicht vollständig rund sein sondern können z. B. auch oval ausgebildet sein. Grundsätzlich können beliebige Bürsten vorgesehen sein, beispielsweise auch Bürsten, die eine Linearbewegung durchzuführen, oder umlaufende Bürsten.

Es kann vorgesehen sein, dass die Bürsten einen Nylonbesatz aufweisen. Grundsätzlich kann sich allerdings ein beliebiger Bürstenbesatz eignen, beispielsweise auch ein Bürstenbesatz aus Naturfasern, aus Kunstfasern oder aus Draht. Der Fachmann kann einen zum Bürsten des Kabelschirmgeflechts geeigneten Besatz anwendungsbedingt und in Abhängigkeit des Materials des Kabelschirmgeflechts auswählen.

In einer vorteilhaften Weiterbildung der Erfindung kann vorgesehen sein, dass die wenigstens eine antreibbare Bürste während des Bürstens entlang des Umfangs des Kabels um das Kabel herum gedreht wird.

Insbesondere wenn eine geringe Anzahl Bürsten, beispielsweise nur genau eine Bürste, vorgesehen ist, kann es von Vorteil sein, die wenigstens eine Bürste während des Bürstens entlang des Umfangs des Kabels um das Kabel herum zu drehen. Hierdurch kann ein Umlegen bzw. Bearbeiten des Kabelschirmgeflechts vollumfänglich erfolgen.

Es kann vorgesehen sein, dass das Kabel während des Bürstens bzw. während des Umlegens des Kabelschirmgeflechts verdrehsicher fixiert wird. Es kann eine Klemmvorrichtung vorgesehen sein, um das elektrische Kabel während der Bearbeitung gegen ein Verdrehen zu sichern. Eine verdrehsichere Fixierung des Kabels ist für eine automatisierte Bearbeitung des Kabels ist in der Regel vorteilhaft. Auch eine axiale Sicherung des elektrischen Kabels mittels der Klemmvorrichtung, dauerhaft oder nur während bestimmter Bearbeitungsschritte, ist möglich.

Aufgrund der Klemmvorrichtung kann sich die Erfindung insbesondere auch zur Bearbeitung eines Kabelendes eines elektrischen Kabels eignen, das auf einer Kabeltrommel angeordnet ist.

Die Klemmvorrichtung kann beispielsweise wenigstens zwei an das Kabel zustellbare Klemmbacken aufweisen. Grundsätzlich kann allerdings eine beliebige Klemmvorrichtung vorgesehen sein, insbesondere aber eine elektrisch, pneumatisch und/oder hydraulisch ansteuerbare Klemmvorrichtung, die das elektrische Kabel kraftschlüssig zu fixieren vermag.

Die Klemmvorrichtung kann beispielsweise mittels eines Schienensystems, gegebenenfalls unter Verwendung eines Seilzugs und/oder pneumatischer und/oder hydraulischer Komponenten, linear beweglich ausgebildet sein, insbesondere um das freigelegte Kabelschirmgeflecht des Kabels während des Bürstens in oder entgegen der Bürstrichtung axial zwischen den Bürsten hindurch zu bewegen.

Nach der Bearbeitung des ersten bzw. vorderen Kabelendes des elektrischen Kabels kann gegebenenfalls auch das zweite bzw. hintere Kabelende des elektrischen Kabels erfindungsgemäß bearbeitet werden.

Nach dem erfindungsgemäßen Umbürsten des Kabelschirmgeflechts können im Rahmen des erfindungsgemäßen Verfahrens optional auch noch weitere Bearbeitungsschritte zur Konfektionierung des elektrischen Kabels vorgesehen sein, bis zu einer vollständigen Steckverbindermontage.

Die Erfindung betrifft auch eine Vorrichtung zum Bearbeiten eines elektrischen Kabels, aufweisend wenigstens eine antreibbare Bürste die eingerichtet ist, um ein Kabelschirmgeflecht des Kabels, das entlang einer Längsachse des Kabels ausgehend von einem zu bearbeitenden Kabelende bis zu einer ersten Abisolierposition freigelegt ist, durch Bürsten in Richtung auf ein dem zu bearbeitenden Kabelende abgewandtes Kabelende umzulegen. Die Vorrichtung weist eine Steuereinrichtung auf die eingerichtet ist, um eine definierte Umlegeposition für das Kabelschirmgeflecht zu bestimmen. Die Vorrichtung weist ferner eine Aktuatoreinrichtung auf die eingerichtet ist, um eine Formhülse auf das Kabel aufzubringen und mit einem dem zu bearbeitenden Kabelende zugewandten, vorderen Ende an der Umlegeposition zu positionieren. Es ist vorgesehen, dass die Umlegeposition von der ersten Abisolierposition abweicht und/oder dass die Formhülse eine stirnseitige Anschlagfläche für das Kabelschirmgeflecht aufweist. Die Formhülse ist wieder von dem Kabel entfernbar, nachdem das Kabelschirmgeflecht auf die Formhülse umgelegt wurde.

Im eingelegten Zustand kann das elektrische Kabel im Rahmen der Erfindung auch als Teil der Vorrichtung angesehen werden.

Das erfindungsgemäße Verfahren und die erfindungsgemäße Vorrichtung können sich besonders zur Bearbeitung von Kabeln zur Verwendung als Datenkabel in der Hochfrequenztechnik gut eignen.

Beispielsweise kann aber auch die Verwendung der Erfindung mit Kabeln für Fahrzeuge, insbesondere Kraftfahrzeuge, von Vorteil sein. Grundsätzlich eignet sich die Erfindung zur Bearbeitung beliebiger Kabel für beliebige Einsatzgebiete innerhalb der gesamten Elektrotechnik.

Die Erfindung betrifft auch ein Computerprogrammprodukt mit Programmcodemitteln, um ein Verfahren gemäß den vorstehenden und nachfolgenden Ausführungen durchzuführen, wenn das Programm auf einer Steuereinrichtung einer Vorrichtung zum Bearbeiten eines elektrischen Kabels ausgeführt wird (insbesondere auf einer Vorrichtung gemäß den vorstehenden und nachfolgenden Ausführungen).

Die Erfindung betrifft außerdem eine Formhülse für eine Vorrichtung zum Bearbeiten eines elektrischen Kabels. Die Formhülse weist vorzugsweise die im Zusammenhang mit dem erfindungsgemäßen Verfahren und der erfindungsgemäßen Vorrichtung genannten Merkmale und Vorteile auf.

Die Erfindung betrifft ferner ein elektrisches Kabel, das nach einem Verfahren gemäß den vorstehenden und nachfolgenden Ausführungen oder mit einer Vorrichtung gemäß den vorstehenden und nachfolgenden Ausführungen bearbeitet wurde.

Merkmale, die im Zusammenhang mit dem erfindungsgemäßen Verfahren beschrieben wurden, sind selbstverständlich auch für die Vorrichtung, das Computerprogrammprodukt, die Formhülse und das elektrische Kabel vorteilhaft umsetzbar - und umgekehrt. Ferner können Vorteile, die bereits im Zusammenhang mit dem erfindungsgemäßen Verfahren genannt wurden, auch auf die Vorrichtung, das Computerprogrammprodukt, die Formhülse und das elektrische Kabel bezogen verstanden werden - und umgekehrt.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielswiese ausschließlich aus den in Anspruch 1 genannten Merkmalen bestehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: die erfindungsgemäße Vorrichtung in einem Zustand vor dem Aufbringen der Formhülse auf das Kabel;
- Figur 2: die erfindungsgemäße Vorrichtung in einem Zustand nach dem Aufbringen der Formhülse auf das Kabel und während der Zustellung der Bürsten;
- Figur 3: die erfindungsgemäße Vorrichtung in einem Zustand während des Bürstens des Kabelschirmgeflechts zum Umlegen des Kabelschirmgeflechts;
- Figur 4: die erfindungsgemäße Vorrichtung in einem Zustand nach dem Umlegen des Kabelschirmgeflechts und vor dem Entfernen der Formhülse;
- Figur 5: die erfindungsgemäße Vorrichtung in einem Zustand nach dem Entfernen der Formhülse;
- Figur 6: eine beispielhafte Vorbearbeitung des Kabelschirmgeflechts mit einem zangenartigen Werkzeug zum radialen Aufweiten des Kabelschirmgeflechts;
- Figur 7: eine perspektivische Ansicht einer Halbschale einer mehrteiligen Formhülse;
- Figur 8: eine Seitenansicht einer Halbschale einer weiteren mehrteiligen Formhülse mit einem Übergangsradius;
- Figur 9: einen beispielhaften Verfahrensablauf für die Bearbeitung des Kabelendes;
- Figur 10: ein beispielhaft bearbeitetes Kabel nach dem erfindungsgemäßen Umlegen des Kabelschirmgeflechts während des Aufbringens einer Presshülse; und
- Figur 11: ein beispielhaft bearbeitetes Kabel nach dem Umlegen des Kabelschirmgeflechts gemäß dem Stand der Technik.

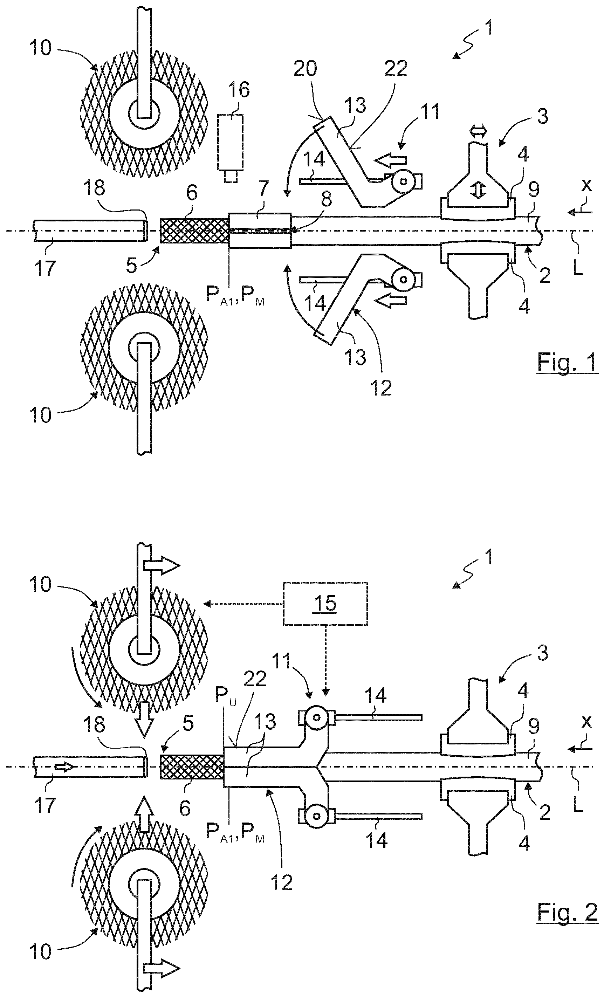

Die Figuren 1 bis 5 zeigen eine erfindungsgemäße Vorrichtung 1 zum Bearbeiten eines elektrischen Kabels 2 in verschiedenen Zuständen während einer erfindungsgemäßen Bearbeitung.

Figur 1 zeigt zunächst einen Grundzustand der Vorrichtung 1, beispielsweise nach dem Einlegen des Kabels 2 durch einen Mitarbeiter der Produktion und einer Zustellung des Kabels 2 bis in eine Initialposition. Zur Zustellung des Kabels 2 kann die Vorrichtung 1 beispielsweise eine Klemmvorrichtung 3 mit zwei an das Kabel 2 zustellbaren Klemmbacken 4 aufweisen. Die Klemmbacken 4 können das Kabel 2 zwischeneinander fixieren. Ferner kann die Klemmvorrichtung 3 bzw. können die Klemmbacken 4 entlang einer Vorschubrichtung x (vgl. Pfeil in Figur 1) bewegbar sein, um das Kabel 2 vor, während oder nach dessen Bearbeitung zu transportieren. Die Klemmvorrichtung 3 bzw. die Klemmbacken 4 können eingerichtet sein, um das Kabel 2 verdrehsicher zu halten.

Grundsätzlich eignet sich die Erfindung zur Bearbeitung eines zu bearbeitenden Kabelendes 5 eines beliebigen elektrischen Kabels 2, das einen Außenleiter, insbesondere ein Kabelschirmgeflecht 6, aufweist. Die erfindungsgemäße Bearbeitung kann insbesondere an einem elektrischen Kabel 2 erfolgen, dessen Kabelschirmgeflecht 6 entlang der Längsachse L des Kabels 2 ausgehend von dem zu bearbeitenden Kabelende 5 bis zu einer ersten Abisolierposition P_{A1} freigelegt ist.

Optional kann bereits eine Steckverbinderkomponente des späteren Steckverbinders (der spätere Steckverbinder ist in den Figuren nicht dargestellt) an dem Kabel 2 vormontiert bzw. befestigt sein. Beispielhaft ist eine Stützhülse 7 mit einem axialen Längsschlitz 8 in den Figuren dargestellt. Die Erfindung eignet sich zur Bearbeitung eines elektrischen Kabels 2 mit einer vorbestückten Stützhülse 7 mit einem Längsschlitz 8 besonders vorteilhaft.

Vorliegend ist die Stützhülse 7 beispielhaft mit ihrem vorderen Ende exakt an der Abisolierposition P_{A1} positioniert, ausgehend von der das Kabelschirmgeflecht 6 von einem Kabelmantel 9 des Kabels 2 befreit ist. Die Montageposition P_{M} der Stützhülse 7 entspricht somit der Abisolierposition P_{A1}. Dies ist allerdings nicht zwingend der Fall; die Stützhülse 7 kann insbesondere auch weiter hinten oder weiter vorne positioniert sein.

Im Rahmen der erfindungsgemäßen Bearbeitung ist vorgesehen, das Kabelschirmgeflecht 6 unter Verwendung wenigstens einer antreibbaren Bürste 10 nach hinten in Richtung auf ein dem zu bearbeitenden Kabelende 5 abgewandtes Kabelende (nicht dargestellt) umzulegen. Beispielhaft weist die dargestellte Vorrichtung 1 genau zwei antreibbare Bürsten 10 auf. Grundsätzlich kann allerdings auch nur eine einzige Bürste 10 vorgesehen sein. Es können auch mehr als zwei Bürsten 10 vorgesehen sein, beispielsweise drei Bürsten 10, vier Bürsten 10 oder noch mehr Bürsten 10. Die Verwendung von genau zwei Bürsten 10 ist allerdings besonders vorteilhaft für die erfindungsgemäße Bearbeitung.

Die Vorrichtung 1 weist eine Aktuatoreinrichtung 11 auf, die eingerichtet ist, um eine Formhülse 12 auf das Kabel 2 aufzubringen. Die beispielhaft dargestellte Aktuatoreinrichtung 11 ist ausgebildet, um eine aus zwei Halbschalen 13 ausgebildete Formhülse 12 durch eine Drehbewegung seitlich auf das Kabel 2 aufzubringen. Grundsätzlich können die Halbschalen 13 allerdings auch durch eine ausschließlich lineare Bewegung in Richtung auf die Längsachse L des Kabels 2 zugestellt werden. Auf die genaue Art der Zustellung kommt es vorliegend nicht unbedingt an. Die Formhülse 12 kann beispielsweise auch aus mehr als zwei Halbschalen 13 bestehen, weitere Komponenten aufweisen oder sogar einteilig ausgebildet sein (z. B. in der Art eines Rohrs). Entsprechend vermag der Fachmann die Zustellung bzw. die Aktuatoreinrichtung 11 anzupassen.

Die Aktuatoreinrichtung 11 ist ferner ausgebildet, um die Formhülse 12 mit einem dem zu bearbeitenden Kabelende 5 zugewandten, vorderen Ende an einer definierten Umlegeposition P_{U} zu positionieren. Hierfür ist beispielhaft eine Linearführung entlang zweier Schienen 14 vorgesehen.

Figur 2 zeigt den Zustand der Vorrichtung 1 nach dem Aufbringen der Formhülse 12 auf das Kabel 2 und während der Zustellung der Bürsten 10.

In Figur 2 ist außerdem beispielhaft eine Steuereinrichtung 15 als Blackbox strichliniert dargestellt, die ein erfindungsgemäßes Verfahren auszuführen und zu überwachen vermag. Hierzu kann die Steuereinrichtung 15 beispielsweise eingerichtet sein, um Steuersignale an die Aktuatoreinrichtung 11 und/oder weitere Aktoren, beispielsweise eine Aktuatorbaugruppe zur Ansteuerung der Bürsten 10, zu übermitteln (in Figur 2 ebenfalls angedeutet). Die Steuereinrichtung 15 kann außerdem eingerichtet sein, um die definierte Umlegeposition P_{U} für das Kabelschirmgeflecht 6 zu bestimmen, um anschließend das vordere Ende der Formhülse 12 durch die Aktuatoreinrichtung 11 entsprechend zu positionieren.

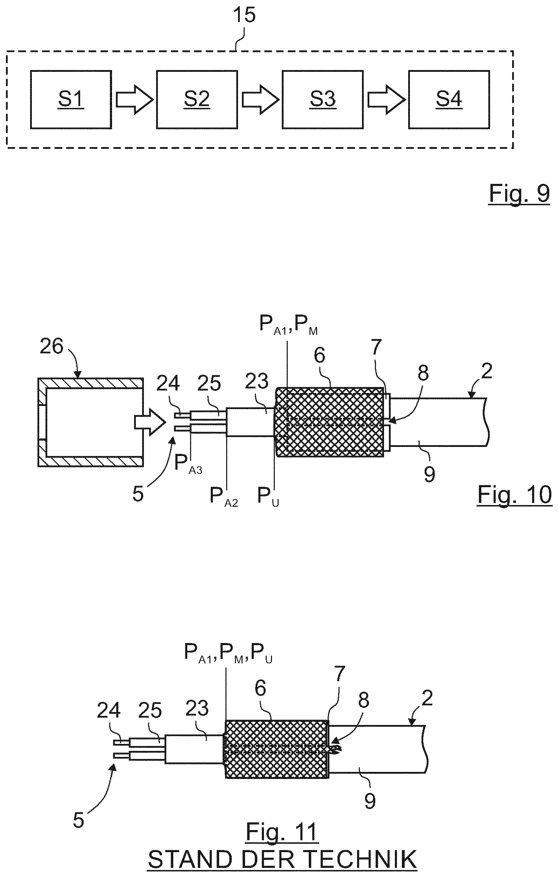

Wie in Figur 2 dargestellt, kann die Umlegeposition P_{U} erfindungsgemäß von der ersten Abisolierposition P_{A1} abweichen. Die Umlegeposition P_{U} wurde vorliegend derart bestimmt, dass die Umlegeposition P_{U} entlang der Längsachse L des Kabels 2 näher an dem zu bearbeitenden Kabelende 5 angeordnet ist als die erste Abisolierposition P_{A1}. Die Umlegeposition P_{U} kann insbesondere auch in Abhängigkeit von der Montageposition P_{M} einer vormontierten Steckverbinderkomponente des späteren elektrischen Steckverbinders bestimmt werden - also beispielsweise in Abhängigkeit von der Position der Stützhülse 7. Die Umlegeposition P_{U} kann außerdem in Abhängigkeit von der ersten Abisolierposition P_{A1} bestimmt werden. Ferner kann die Umlegeposition P_{U} in Abhängigkeit von einer oder mehreren weiteren Abisolierpositionen P_{A2}, P_{A3} (vgl. Figur 10), bestimmt werden.

Zur Bestimmung der Umlegeposition P_{U} kann beispielsweise eine Sensoreinrichtung 16 verwendet werden (beispielhaft nur in Figur 1 angedeutet), die mit der Steuereinrichtung 15 kommunikationsverbunden sein kann. Die Sensoreinrichtung 16 kann beispielsweise als Kamera ausgebildet sein und das Kabel 2 und/oder eine auf dem Kabel 2 vormontierte Steckverbinderkomponente oder deren Position vermessen.

Nachdem oder während die Formhülse 12 auf das Kabel 2 aufgebracht wurde, kann die wenigstens eine antreibbare Bürste 10 in Richtung auf die Längsachse L des Kabels 2 zugestellt werden, wie in Figur 2 angedeutet. Ferner können die Bürsten 10 in Richtung auf das von dem zu bearbeitende Kabelende 5 abgewandte, hintere Kabelende angetrieben werden und auch gleichzeitig entgegen der Vorschubrichtung x des Kabels 2 auf die erste Abisolierposition P_{A1} zubewegt werden, insbesondere sobald die Bürsten 10 in Kontakt mit dem Kabelschirmgeflecht 6 kommen. Hierbei kommt es lediglich auf eine Relativbewegung zwischen dem Kabel 2 und den Bürsten 10 an; im Ausführungsbeispiel ist beispielhaft eine Bewegung der Bürsten 10 dargestellt, grundsätzlich kann allerdings zusätzlich oder alternativ auch das Kabel 2 in Richtung auf die Bürsten 10 zubewegt werden.

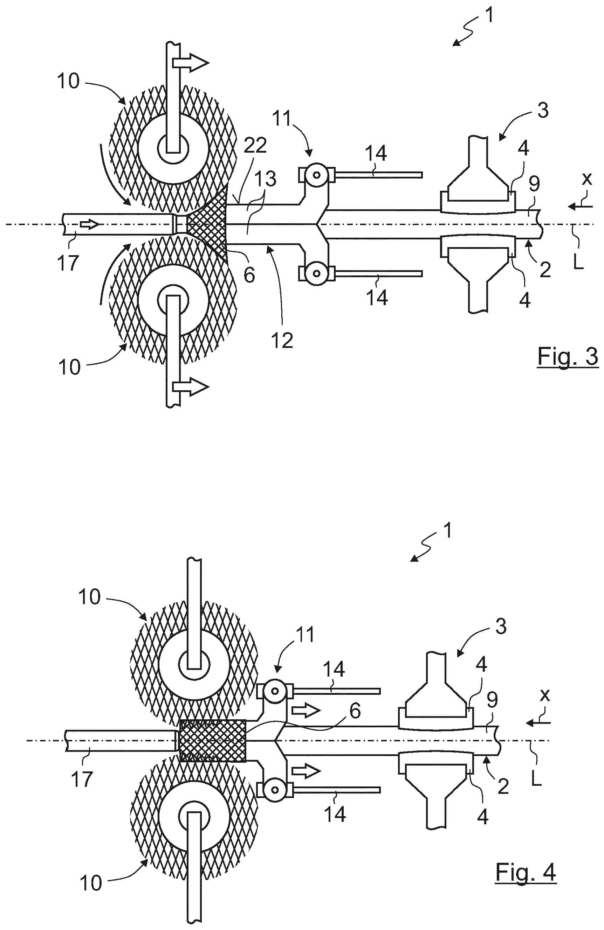

Figur 3 zeigt einen Zustand der Vorrichtung 1 während des Bürstens des Kabelschirmgeflechts 6 zum Umlegen des Kabelschirmgeflechts 6. Zum Schutz von sich unter dem Kabelschirmgeflecht 6 des Kabels 2 befindenden Kabelkomponenten des Kabels 2 kann die dargestellte Schutzhülse 17 entlang der Längsachse L des Kabels 2 in Richtung auf die erste Abisolierposition P_{A1} zwischen das Kabelschirmgeflecht 6 und die darunterliegenden Kabelkomponenten des Kabels 2 (beispielsweise eine Kabelfolie) eingeschoben werden. Um das Einschieben der Stützhülse 7 zu vereinfachen, kann das Kabelschirmgeflecht 6 zuvor vorbearbeitet werden, um eine radial Aufweitung, insbesondere an dem vorderen, freien Ende des Kabelschirmgeflechts 6, zu bewirken. Dies ist nachfolgend noch näher beschrieben. Um das Einschieben zu vereinfachen, kann die Stützhülse 7 außerdem eine Fase 18 an ihrem vorderen, freien Ende aufweisen.

Optional kann vorgesehen sein, dass die wenigstens eine antreibbare Bürste 10 während des Bürstens 10 entlang des Umfangs des Kabels 2 um das Kabel 2 herum gedreht wird. Dies ist in den Ausführungsbeispielen nicht dargestellt und in der Regel auch nur bei Verwendung genau einer Bürste 10 vorteilhaft.

Optional kann außerdem vorgesehen sein, dass das Kabelschirmgeflecht 6 vor dem Umlegen mittels der wenigstens einen antreibbaren Bürste 10 in Richtung auf das zu bearbeitende Kabelende 5 gerade ausgebürstet wird. Dies ist in den Ausführungsbeispielen ebenfalls nicht dargestellt. Vorzugsweise wird das Kabelschirmgeflecht 6 vor dem Umlegen durch die Bürsten 10 nicht ausgebürstet.

Figur 4 zeigt die Vorrichtung 1 in einem Zustand nach dem vollständigen Umlegen des Kabelschirmgeflechts 6 auf die Formhülse 12.

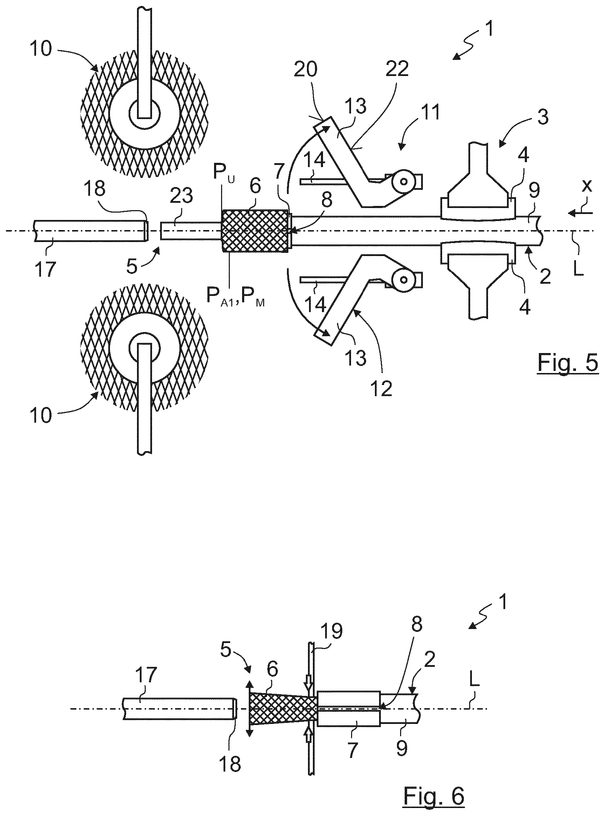

Nach dem Umlegen des Kabelschirmgeflechts 6 auf die Formhülse 12 kann die Formhülse 12 wieder von dem Kabel 2 entfernt werden, wie beispielsweise in Figur 5 dargestellt. Hierfür kann die Formhülse 12 von der Aktuatoreinrichtung 11 beispielsweise entgegen der Vorschubrichtung x bzw. in Richtung auf das von dem zu bearbeitenden Kabelende 5 abgewandte, hintere Kabelende bewegt und anschließend seitlich von dem Kabel 2 entfernt werden, beispielsweise wiederum durch die dargestellte Drehbewegung. Schließlich kann das Kabel 2 optional von der Klemmvorrichtung 3 aus der Vorrichtung 1 herausgefahren und/oder zur Entnahme freigegeben werden.

In Figur 6 ist beispielhaft eine Vorbearbeitung des Kabelschirmgeflechts 6 zum radialen Aufweiten des Kabelschirmgeflechts 6 dargestellt, um die Schutzhülse 17 einfacher unter das Kabelschirmgeflecht 6 einschieben zu können. Hierfür ist beispielhaft ein zangenartiges Werkzeug 19 dargestellt, das radial in Richtung auf die Längsachse L des Kabels 2 an das Kabelschirmgeflecht 6 zustellbar ist. Mittels des zangenartigen Werkzeugs 19 können radiale Eindrücke in dem Kabelschirmgeflecht 6 erzeugt werden, so dass sich das freigelegte Ende des Kabelschirmgeflechts 6 radial aufweitet. Alternativ oder zusätzlich kann auch ein Aufweiten des Kabelschirmgeflechts 6 mittels der wenigstens einen Bürste 10 vorgesehen sein.

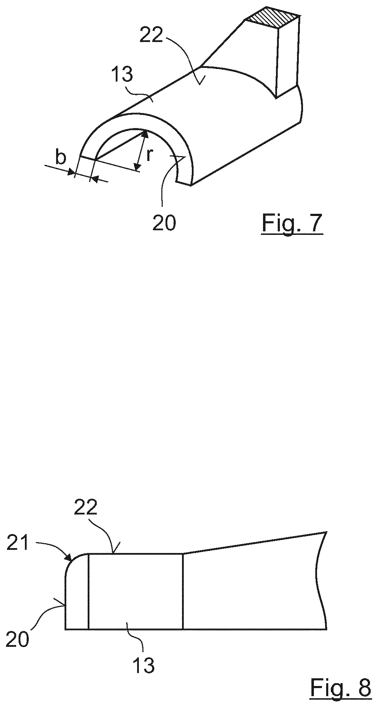

In Figur 7 ist in perspektivischer Ansicht eine einzelne Halbschale 13 der mehrteiligen Formhülse 12 gezeigt. Die Darstellung ist selbstverständlich nur beispielhaft zu verstehen. Die Formhülse 12 weist eine stirnseitige Anschlagfläche 20 für das Kabelschirmgeflecht 6 auf. Die stirnseitige Anschlagfläche 20 der Formhülse 12 verläuft dabei vorzugsweise orthogonal zu der Längsachse L des Kabels 2, wenn die Formhülse 12 auf das Kabel 2 aufgebracht ist.

Durch die stirnseitige Anschlagfläche 20 der Formhülse 12 kann das Kabelschirmgeflecht 6 definiert umgelegt werden. Besonders bevorzugt ist die stirnseitige Anschlagfläche 20 dabei als Kreisring ausgebildet, wie dargestellt. Die Ringbreite b des Kreisrings kann zu dessen Innenradius r ein Verhältnis von mindestens 1:20, vorzugsweise mindestens 1:10, besonders bevorzugt mindestens 1:5 aufweisen. Auch größere oder kleinere Verhältnisse sind allerdings möglich.

Vorzugsweise weist die Formhülse 12 außerdem einen runden Querschnitt auf. Es können sich allerdings auch andere Querschnitte, beispielsweise ein ovaler Querschnitt oder ein rechteckiger Querschnitt, gut eignen.

In Figur 8 ist in einer Seitenansicht eine Halbschale 13 einer weiteren, beispielhaften Formhülse 12 gezeigt. Die Formhülse 12 bzw. die Halbschale 13 weist an dem vorderen Ende einen Übergangsradius 21 auf, der sich ausgehend von der stirnseitigen Anschlagfläche 20 zu der Seitenfläche 22 der Formhülse 12 erstreckt. Hierdurch kann der Übergang des Kabelschirmgeflechts 6 ausgehend von der Anschlagfläche 20 zu der Seitenfläche 22 schonender vorgegeben werden.

Die Formhülse 12 kann sich beispielsweise auch in Richtung auf das vordere Ende verjüngen. Die Formhülse 12 kann sich auch nur abschnittsweise in Richtung auf das vordere Ende verjüngen. Eine beispielhafte, abschnittsweise Verjüngung ist in Figur 8 dargestellt. Hierdurch kann das Kabelschirmgeflecht 6 einem vorgegebenen Verlauf der Formhülse 12 folgen.

In Figur 9 ist ein beispielhafter Verfahrensablauf für die Bearbeitung des Kabelendes 5 dargestellt. Die gezeigten Verfahrensschritte können gegebenenfalls auch vertauscht oder weiter unterteilt sein. Außerdem können auch weitere Verfahrensschritte im Rahmen des erfindungsgemäßen Verfahrens vorgesehen sein. Der dargestellte Verfahrensablauf ist somit nur beispielhaft zu verstehen. Das Verfahren kann als Computerprogrammprodukt mit Programmcodemitteln auf der Steuereinrichtung 15 der Vorrichtung 1 ausgeführt werden. Die Steuereinrichtung 15 ist beispielhaft gestrichelt dargestellt.

Gemäß einem ersten Verfahrensschritt S1 kann zunächst entlang der Längsachse L des Kabels 2 die definierte Umlegeposition P_{U} für das Kabelschirmgeflecht 6 bestimmt werden. Anschließend kann in einem zweiten Verfahrensschritt S2 die Formhülse 12 auf das Kabel 2 aufgebracht und mit ihrem dem zu bearbeitenden Kabelende 5 zugewandten, vorderen Ende an der Umlegeposition P_{U} positioniert werden. Anschließend kann das Kabelschirmgeflecht 6 in einem dritten Verfahrensschritt S3 mittels der wenigstens einen Bürste 10 in Richtung auf das von dem zu bearbeitenden Kabelende 5 abgewandte Kabelende umgebürstet werden. Schließlich kann in einem vierten Verfahrensschritt S4 die Formhülse 12 wieder von dem Kabel 2 entfernt werden.

Figur 10 zeigt ein beispielhaftes Kabel 2 nach dem erfindungsgemäßen Umlegen des Kabelschirmgeflechts 6. Der Verlauf der Stützhülse 7 unterhalb des Kabelschirmgeflechts 6 ist gestrichelt angedeutet.

Das dargestellte Kabel 2 ist beispielhaft als zweiadriges Datenkabel ausgebildet. Unterhalb des Kabelschirmgeflechts 6 verläuft eine Füllschicht 23, in der die Innenleiter 24 des Kabels 2 verlaufen. Zwischen der Füllschicht 23 und dem Kabelschirmgeflecht 6 kann optional auch eine Kabelfolie verlaufen, die im Ausführungsbeispiel allerdings zur Vereinfachung nicht dargestellt ist. Die Innenleiter 24 des Kabels 2 sind jeweils von einer Isolation 25 umhüllt. Der Aufbau des Kabels 2 ist lediglich beispielhaft zu verstehen und kann grundsätzlich beliebig sein. Beispielsweise kann auch ein Koaxialkabel erfindungsgemäß bearbeitet werden.

Es ist erkennbar, dass die Umlegeposition P_{U} aufgrund der erfindungsgemäßen Bearbeitung von der ersten Abisolierposition P_{A1} abweicht.

Zum Vergleich ist beispielhaft in Figur 11 ein gemäß dem Stand der Technik bearbeitetes Kabel 2 gezeigt, bei dem Umlegeposition P_{U} und die erste Abisolierposition P_{A1} identisch sind.

Wird nun beispielsweise eine Presshülse 26 bzw. eine Crimphülse (vgl. Figur 10) ausgehend von dem zu bearbeitenden Kabelende 5 auf das Kabel 2 aufgebracht, um das Kabelschirmgeflecht 6 zwischen der Presshülse 26 und der Stützhülse 7 in einem anschließenden Crimpprozess zu verpressen, so kann die Kontaktierung der Presshülse 26 mit dem Kabelschirmgeflecht 6 durch die erfindungsgemäße Positionierung der Umlegeposition P_{U} vor der ersten Abisolierposition P_{A1} verbessert sein, da das Kabelschirmgeflecht 6 aufgrund der vorgelagerten und von der Stützhülse 7 beabstandeten Position die stirnseitige Innenfläche der Presshülse 26 besser zu kontaktieren vermag.

Aufgrund der erfindungsgemäßen Formhülse 12 kann außerdem vermieden werden, dass das Kabelschirmgeflecht 6 durch das Umbürsten den spezifischen geometrischen Vorgaben bzw. Strukturen der Stützhülse 7 folgt und beispielsweise mit einem oder mehreren Einzeldrähten in den Längsschlitz 8 eindringt. Hierdurch kann verhindert werden, dass Einzeldrähte des Kabelschirmgeflechts 6 in Richtung auf das von dem zu bearbeitenden Kabelende 5 abgewandte Kabelende über die Presshülse 26 hinausragen, wie in Figur 11 angedeutet.

## Patentansprüche

1. Verfahren zum Bearbeiten eines elektrischen Kabels (2), wonach ein Kabelschirmgeflecht (6) des Kabels (2), das entlang einer Längsachse (L) des Kabels (2) ausgehend von einem zu bearbeitenden Kabelende (5) bis zu einer ersten Abisolierposition (P_{A1}) freigelegt ist, durch das Bürsten mittels wenigstens einer antreibbaren Bürste (10) in Richtung auf ein dem zu bearbeitenden Kabelende (5) abgewandtes Kabelende umgelegt wird, wobei entlang der Längsachse (L) des Kabels (2) eine definierte Umlegeposition (P_{U}) für das Kabelschirmgeflecht (6) bestimmt wird, wobei vor oder während des Bürstens eine Formhülse (12) auf das Kabel (2) aufgebracht und mit einem dem zu bearbeitenden Kabelende (5) zugewandten, vorderen Ende an der Umlegeposition (P_{U}) positioniert wird, um das Kabelschirmgeflecht (6) ausgehend von der Umlegeposition (P_{U}) auf die Formhülse (12) umzulegen, wobei die Formhülse (12) wieder von dem Kabel (2) entfernt wird, nachdem das Kabelschirmgeflecht (6) auf die Formhülse (12) umgelegt wurde, und wobei
a) die Umlegeposition (P_{U}) derart bestimmt wird, dass die Umlegeposition (P_{U}) von der ersten Abisolierposition (P_{A1}) abweicht; und/oder
b) die Formhülse (12) eine stirnseitige Anschlagfläche (20) für das Kabelschirmgeflecht (6) aufweist.

2. Verfahren nach Anspruch 1, wobei die Umlegeposition (P_{U}) derart bestimmt wird, dass die Umlegeposition (P_{U}) entlang der Längsachse (L) des Kabels (2) näher an dem zu bearbeitenden Kabelende (5) abgeordnet ist als die erste Abisolierposition (P_{A1}).

3. Verfahren nach Anspruch 1 oder 2, wobei die Umlegeposition (P_{U}) in Abhängigkeit von einer Montageposition (P_{U}) einer auf dem Kabel (2) vormontierten Steckverbinderkomponente (7) eines elektrischen Steckverbinders bestimmt wird.

4. Verfahren nach einem der Ansprüche 1 bis 3, wobei die Umlegeposition (P_{U}) in Abhängigkeit von der ersten Abisolierposition (P_{A1}) bestimmt wird.

5. Verfahren nach einem der Ansprüche 1 bis 4, wobei die Umlegeposition (P_{U}) in Abhängigkeit von einer weiteren Abisolierposition (P_{A2}, P_{A3}), ausgehend von der eine weitere Kabelkomponente des Kabels (2) entlang der Längsachse (L) des Kabels (2) bis zu dem zu bearbeitenden Kabelende (5) freigelegt ist, bestimmt wird.

6. Verfahren nach einem der Ansprüche 1 bis 5, wobei die Formhülse (12) von einem auf dem zu bearbeitenden Kabelende (5) zu montierenden elektrischen Steckverbinder unabhängig ist.

7. Verfahren nach einem der Ansprüche 1 bis 6, wobei die stirnseitige Anschlagfläche (20) der Formhülse (12) zumindest abschnittsweise orthogonal zu der Längsachse (L) des Kabels (2) verläuft, wenn die Formhülse (12) auf das Kabel (2) aufgebracht ist.

8. Verfahren nach einem der Ansprüche 1 bis 7, wobei die stirnseitige Anschlagfläche (20) der Formhülse (12) als Kreisring ausgebildet ist, dessen Ringbreite (b) zu dessen Innenradius (r) ein Verhältnis von mindestens 1:20, vorzugsweise mindestens 1:10, besonders bevorzugt mindestens 1:5 aufweist.

9. Verfahren nach einem der Ansprüche 1 bis 8, wobei die Formhülse (12) an dem vorderen Ende eine Fase und/oder einen Übergangsradius (21) aufweist, vorzugsweise zwischen der stirnseitigen Anschlagfläche (20) und einer Seitenfläche (22) der Formhülse (12).

10. Verfahren nach einem der Ansprüche 1 bis 9, wobei die Formhülse (12) einen runden Querschnitt aufweist.

11. Verfahren nach einem der Ansprüche 1 bis 10, wobei sich die Formhülse (12) in Richtung auf das vordere Ende verjüngt.

12. Verfahren nach einem der Ansprüche 1 bis 11, wobei die Formhülse (12) aus zwei Halbschalen (13) oder mehr Halbschalen (13) ausgebildet ist, die in Richtung auf die Längsachse (L) des Kabels (2) zugestellt werden, um die Formhülse (12) auf das Kabel (2) aufzubringen.

13. Verfahren nach einem der Ansprüche 1 bis 12, wobei die Formhülse (12) über einer auf dem Kabel (2) vormontierten Steckverbinderkomponente eines elektrischen Steckverbinders auf das Kabel (2) aufgebracht wird, vorzugsweise über einer axial geschlitzten Stützhülse (26) des Steckverbinders.

14. Verfahren nach einem der Ansprüche 1 bis 13, wobei vor oder während des Umlegens des Kabelschirmgeflechts (6) eine Schutzhülse (17) entlang der Längsachse (L) des Kabels (2) in Richtung auf die erste Abisolierposition (P_{A1}) zwischen das Kabelschirmgeflecht (6) und darunterliegende Kabelkomponenten des Kabels (2) eingeschoben wird.

15. Vorrichtung (1) zum Bearbeiten eines elektrischen Kabels (2), gemäß des Verfahrens des unabhängigen Anspruchs 1, aufweisend wenigstens eine antreibbare Bürste (10) die eingerichtet ist, um ein Kabelschirmgeflecht (6) des Kabels (2), das entlang einer Längsachse (L) des Kabels (2) ausgehend von einem zu bearbeitenden Kabelende (5) bis zu einer ersten Abisolierposition (P_{A1}) freigelegt ist, durch Bürsten in Richtung auf ein dem zu bearbeitenden Kabelende (5) abgewandtes Kabelende umzulegen, wobei eine Steuereinrichtung (15) vorgesehen und eingerichtet ist, um eine definierte Umlegeposition (P_{U}) für das Kabelschirmgeflecht (6) zu bestimmen, und wobei eine Aktuatoreinrichtung (11) vorgesehen und eingerichtet ist, um eine Formhülse (12) auf das Kabel (2) aufzubringen und mit einem dem zu bearbeitenden Kabelende (5) zugewandten, vorderen Ende an der Umlegeposition (P_{U}) zu positionieren, wobei die Formhülse (12) wieder von dem Kabel (2) entfernbar ist, nachdem das Kabelschirmgeflecht (6) auf die Formhülse (12) umgelegt wurde, und wobei a) die Umlegeposition (P_{U}) von der ersten Abisolierposition (P_{A1}) abweicht; und/oder b) die Formhülse (12) eine stirnseitige Anschlagfläche (20) für das Kabelschirmgeflecht (6) aufweist.

## Claims

1. A method for processing an electrical cable (2), according to which method a braided cable shield (6) of the cable (2) that, proceeding from a cable end (5) to be processed, is exposed along a longitudinal axis (L) of the cable (2) up to a first stripping position (P_{A1}), by brushing by means of at least one drivable brush (10) is folded back in the direction of a cable end which faces away from the cable end (5) to be processed, wherein a defined folding position (Pu) for the braided cable shield (6) is determined along the longitudinal axis (L) of the cable (2), wherein a mold shell (12) is applied to the cable (2) before or during brushing and by way of a front end which faces the cable end (5) to be processed is positioned at the folding position (Pu) so as to, proceeding from the folding position (Pu), fold the braided cable shield (6) onto the mold shell (12), wherein the mold shell (12) is removed from the cable (2) again once the braided cable shield (6) has been folded onto the mold shell (12), and wherein
a) the folding position (Pu) is determined in such a manner that the folding position (Pu) differs from the first stripping position (P_{A1}); and/or
b) the mold shell (12) has an end-face proximal detent face (20) for the braided cable shield (6).

2. The method as claimed in claim 1, wherein the folding position (Pu) is determined in such a manner that the folding position (Pu) along the longitudinal axis (L) of the cable (2) is disposed so as to be closer to the cable end (5) to be processed than the first stripping position (P_{A1}).

3. The method as claimed in claim 1 or 2, wherein the folding position (Pu) is determined as a function of an assembly position (P_{M}) of a plug connector component (7) of an electrical plug connector preassembled on the cable (2).

4. The method as claimed in one of claims 1 to 3, wherein the folding position (Pu) is determined as a function of the first stripping position (P_{A1}).

5. The method as claimed in one of claims 1 to 4, wherein the folding position (Pu) is determined as a function of a further stripping position (P_{A2}, P_{A3}) proceeding from which a further cable component of the cable (2) is exposed along the longitudinal axis (L) of the cable (2) up to the cable end (5) to be processed.

6. The method as claimed in one of claims 1 to 5, wherein the mold shell (12) is independent of an electrical plug connector to be assembled on the cable end (5) to be processed.

7. The method as claimed in one of claims 1 to 6, wherein when the mold shell (12) is applied to the cable (2) the end-face proximal detent face (20) of the mold shell (12) at least in portions runs orthogonally to the longitudinal axis (L) of the cable (2).

8. The method as claimed in one of claims 1 to 7, wherein the end-face proximal detent face (20) of the mold shell (12) is configured as an annulus, the annular width (b) thereof in relation to the internal radius (r) thereof having a ratio of at least 1:20, preferably at least 1:10, particularly preferably at least 1:5.

9. The method as claimed in one of claims 1 to 8, wherein the mold shell (12) at the front end, preferably between the end-face proximal detent face (20) and a lateral face (22) of the mold shell (12), has a chamfer and/or a transition radius (21).

10. The method as claimed in one of claims 1 to 9, wherein the mold shell (12) has a round cross section.

11. The method as claimed in one of claims 1 to 10, wherein the mold shell (12) tapers in the direction toward the front end.

12. The method as claimed in one of claims 1 to 11, wherein the mold shell (12) is configured from two half shells (13) or more half shells (13) which, for applying the mold shell (12) to the cable (2), are actuated in the direction of the longitudinal axis (L) of the cable (2).

13. The method as claimed in one of claims 1 to 12, wherein the mold shell (12) is applied to the cable (2) so as to be over a plug connector component of an electrical plug connector preassembled on the cable (2), preferably so as to be over an axially slotted support sleeve (26) of the plug connector.

14. The method as claimed in one of claims 1 to 13, wherein before or during the folding of the braided cable shield (6), a protective sleeve (17) is inserted in the direction of the first stripping position (P_{A1}) along the longitudinal axis (L) of the cable (2), so as to be between the braided cable shield (6) and underlying cable components of the cable (2).

15. A device (1) for processing an electrical cable (2) according to the method of independent claim 1, said device having at least one drivable brush (10) which is specified to fold a braided cable shield (6) of the cable (2) that, proceeding from a cable end (5) to be processed, is exposed along a longitudinal axis (L) of the cable (2) up to a first stripping position (P_{A1}), by brushing in the direction toward a cable end which faces away from the cable end (5) to be processed, wherein a control installation (15) is provided and specified to determine a defined folding position (Pu) for the braided cable shield (6), and wherein an actuator installation (11) is provided and specified to apply a mold shell (12) to the cable (2) and to position the latter by way of a front end which faces the cable end (5) to be processed at the folding position (Pu), wherein the mold shell (12) is removable from the cable (2) again once the braided cable shield (6) has been folded onto the mold shell (12), and wherein
a) the folding position (Pu) differs from the first stripping position (P_{A1}); and/or
b) the mold shell (12) has an end-face proximal detent face (20) for the braided cable shield (6).

## Revendications

1. Procédé destiné à traiter un câble électrique (2), selon lequel une tresse de blindage de câble (6) du câble (2), qui est exposée le long d'un axe longitudinal (L) du câble (2) à partir d'une extrémité de câble (5) à traiter jusqu'à une première position de dénudage (P_{A1}), est repliée par brossage avec au moins une brosse entraînable (10) en direction d'une extrémité de câble opposée à l'extrémité de câble (5) à traiter, dans lequel le long de l'axe longitudinal (L) du câble (2) est déterminée une position de pliage (P_{U}) définie pour la tresse de blindage de câble (6), dans lequel avant ou pendant le brossage un manchon moulé (12) est appliqué sur le câble (2) et est positionné au niveau de la position de pliage (PU) avec une extrémité avant tournée vers l'extrémité de câble (5) à traiter afin de replier la tresse de blindage de câble (6) à partir de la position de pliage (P_{U}) sur le manchon moulé (12), dans lequel le manchon moulé (12) est à nouveau retiré du câble (2) après que la tresse de blindage de câble (6) a été repliée sur le manchon moulé (12), et dans lequel
a) la position de pliage (P_{U}) est déterminée de telle sorte que la position de pliage (P_{U}) s'écarte de la première position de dénudage (P_{A1}) ; et/ou
b) le manchon moulé (12) présente une surface de butée côté avant (20) pour la tresse de blindage de câble (6).

2. Procédé selon la revendication 1, dans lequel la position de pliage (P_{U}) est déterminée de telle sorte que la position de pliage (P_{U}) soit disposée le long de l'axe longitudinal (L) du câble (2) de manière plus proche de l'extrémité de câble à traiter (5) que la première position de dénudage (P_{A1}).

3. Procédé selon la revendication 1 ou 2, dans lequel la position de pliage (P_{U}) est déterminée en fonction d'une position de montage (P_{M}) d'un composant de connecteur (7) d'un connecteur électrique qui est prémonté sur le câble (2).

4. Procédé selon l'une des revendications 1 à 3, dans lequel la position de pliage (P_{U}) est déterminée en fonction de la première position de dénudage (P_{A1}).

5. Procédé selon l'une des revendications 1 à 4, dans lequel la position de pliage (P_{U}) est déterminée en fonction d'une autre position de dénudage (P_{A2}, P_{A3}), à partir de laquelle un autre composant de câble du câble (2) est exposé le long de l'axe longitudinal (L) du câble (2) jusqu'à l'extrémité de câble (5) à traiter.

6. Procédé selon l'une des revendications 1 à 5, dans lequel le manchon moulé (12) est indépendant d'un connecteur électrique à monter sur l'extrémité de câble (5) à traiter.

7. Procédé selon l'une des revendications 1 à 6, dans lequel la surface de butée côté avant (20) du manchon moulé (12) s'étend au moins par sections de manière orthogonale à l'axe longitudinal (L) du câble (2) lorsque le manchon moulé (12) est appliqué sur le câble (2).

8. Procédé selon l'une des revendications 1 à 7, dans lequel la surface de butée côté avant (20) du manchon moulé (12) est conçue sous la forme d'un anneau circulaire dont la largeur d'anneau (b) par rapport à son rayon intérieur (r) présente un rapport d'au moins 1:20, de préférence d'au moins 1:10, particulièrement préféré d'au moins 1:5.

9. Procédé selon l'une des revendications 1 à 8, dans lequel le manchon moulé (12) présente à l'extrémité avant un chanfrein et/ou un rayon de transition (21), de préférence entre la surface de butée côté avant (20) et une surface latérale (22) du manchon moulé (12).

10. Procédé selon l'une des revendications 1 à 9, dans lequel le manchon moulé (12) présente une section transversale ronde.

11. Procédé selon l'une des revendications 1 à 10, dans lequel le manchon moulé (12) se rétrécit en direction de l'extrémité avant.

12. Procédé selon l'une des revendications 1 à 11, dans lequel le manchon moulé (12) est conçu à partir de deux demi-coques (13) ou de plusieurs demi-coques (13) qui sont avancées en direction de l'axe longitudinal (L) du câble (2) pour appliquer le manchon moulé (12) sur le câble (2).

13. Procédé selon l'une des revendications 1 à 12, dans lequel le manchon moulé (12) est appliqué sur le câble (2) sur un composant de connecteur d'un connecteur électrique qui est prémonté sur ce câble (2), de préférence par le biais d'un manchon de protection (26), fendu axialement, du connecteur.

14. Procédé selon l'une des revendications 1 à 13, dans lequel, avant ou pendant le pliage de la tresse de blindage de câble (6), un manchon de protection (17) est inséré le long de l'axe longitudinal (L) du câble (2) en direction de la première position de dénudage (P_{A1}) entre la tresse de blindage de câble (6) et les composants de câble sous-jacents du câble (2).

15. Dispositif (1) destiné à traiter un câble électrique (2) selon le procédé de la revendication indépendante 1, présentant au moins une brosse entraînable (10) agencée pour plier une tresse de blindage de câble (6) du câble (2), qui est exposée le long d'un axe longitudinal (L) du câble (2) à partir d'une extrémité de câble (5) à traiter jusqu'à une première position de dénudage (P_{A1}), par brossage en direction d'une extrémité de câble opposée à l'extrémité de câble (5) à traiter, dans lequel un moyen de commande (15) est prévu et agencé pour déterminer une position de pliage (P_{U}) définie pour la tresse de blindage de câble (6) et dans lequel un moyen d'actionnement (11) est prévu et agencé pour appliquer un manchon moulé (12) sur le câble (2) et pour le positionner sur la position de pliage (P_{U}) avec une extrémité avant tournée vers l'extrémité de câble (5) à traiter, dans lequel le manchon moulé (12) peut être à nouveau retiré du câble (2) une fois que la tresse de blindage de câble (6) sur le manchon moulé (12) a été repliée, et dans lequel a) la position de pliage (P_{U}) s'écarte de la première position de dénudage (P_{A1}) ; et/ou b) le manchon moulé (12) présente une surface de butée côté avant (20) pour la tresse de blindage de câble (6).
